Europäisches Patentamt

European Patent Office

Office européen des brevets

(11) Numéro de publication: **0 268 619 B1**

## FASCICULE DE BREVET EUROPEEN

(45) Date de publication de fascicule du brevet: **30.06.93**  (51) Int. Cl.⁵: **H01F  7/08**, H02K 33/16

(21) Numéro de dépôt: **87903235.7**

(22) Date de dépôt: **01.06.87**

(86) Numéro de dépôt internationale :
**PCT/CH87/00063**

(87) Numéro de publication internationale :
**WO 87/07757 (17.12.87 87/28)**

(54) DISPOSITIF D'ACTIONNEMENT ELECTROMAGNETIOUE.

(30) Priorité: **02.06.86 CH 2228/86**

(43) Date de publication de la demande:
**01.06.88 Bulletin  88/22**

(45) Mention de la délivrance du brevet:
**30.06.93 Bulletin  93/26**

(84) Etats contractants désignés:
**DE FR GB NL**

(56) Documents cités:
**EP-A- 0 127 692**
**US-A- 4 195 277**
**US-A- 4 349 757**
**US-A- 4 389 131**

(73) Titulaire: **PORTESCAP**
**Rue Jardinière 157**
**CH-2300 La Chaux-de-Fonds(CH)**

(72) Inventeur: **OUDET, Claude**
**12, rue du Capitaine Arrachart**
**F-25000 Besançon(FR)**

(74) Mandataire: **Hranitzky, Wilhelm Max et al**
**c/o WILLIAM BLANC & CIE 9, rue du Valais**
**CH-1202 Genève (CH)**

EP 0 268 619 B1

## Description

La présente invention concerne un dispositif d'actionnement électromagnétique comportant un organe mobile et une structure statorique, du type selon lequel l'organe mobile comprend au moins une partie aimantée perpendiculairement à la direction de son déplacement et ayant une faible épaisseur par rapport à ses autres dimensions, la structure statorique comportant au moins un circuit magnétique réalisé en un matériau de très haute perméabilité magnétique et présentant un entrefer dans lequel est disposé au moins une portion de ladite partie aimantée, la structure statorique comportant en outre au moins une bobine électrique d'excitation couplée avec ledit circuit magnétique.

Des dispositifs de ce type sont décrits par exemple dans les brevets US 4 195 277 et 4 349 757. Dans ces dispositifs connus, il existe toujours un couple résiduel qu'est le couple agissant sur l'organe mobile en l'absence de courant d'excitation. La présence de ce couple affecte non seulement les caractéristiques du mouvement mais également la position de l'organe mobile à l'état de repos. D'autre part, les dispositifs connus, déjà du fait de leur structure et de leur dimension, ne fournissent pas une force constante sur l'organe mobile le long du parcours de celui-ci.

L'invention vise notamment à fournir un dispositif d'actionnement simple et économique permettant d'effectuer un déplacement de l'organe mobile, sur une distance limitée, à force sensiblement constante et ne présentant pratiquement aucun couple résiduel.

Un tel dispositif est utilisable par exemple pour actionner le bras support de tête de lecture-écriture d'une mémoire à disque rotatif, tel qu'un disque dur ou souple, magnétique ou optique.

Pour de telles applications on utilise souvent des dispositifs à bobine mobile dans une structure statorique à aimant permanent, appelés dispositifs "voice coil". Ces dispositifs nécessitent une masse d'aimants relativement grande ce qui entraîne un coût relativement élevé. Il présente par ailleurs notamment un encombrement et une inertie qui ne sont pas minimales par rapport à la force produite.

L'invention vise à remédier également aux inconvénients de ces dispositifs connus.

A cet effet, le dispositif selon l'invention est agencé de façon que la partie aimantée puisse effectuer un déplacement limité à l'intérieur de l'entrefer sous l'effet d'une force constante proportionnelle au courant circulant dans la ou les bobines d'excitation et ne soit pratiquement pas soumise à un couple résiduel en l'absence de courant d'excitation.

Des formes d'exécution préférées de l'invention sont décrites dans les revendications 1 à 8.

Les caractéristiques, les avantages et les possibilités d'application de l'invention ressortiront plus clairement de la description donnée ci-après de différents exemples de réalisation, non limitatifs, qui sont illustrés par le dessin annexé dans lequel :

La figure 1 est une vue d'un dispositif d'actionnement linéaire selon l'invention,

la figure 2 est une vue en coupe selon la ligne II-II de la figure 1,

la figure 3 est une vue d'une variante d'exécution du dispositif d'actionnement linéaire selon la figure 1,

la figure 4 est une section selon la ligne IV-IV de la figure 3,

la figure 5 est une vue d'un dispositif d'actionnement à bras rotatif selon l'invention,

la figure 6 est une coupe selon la ligne VI-VI de la figure 5,

la figure 7 est une coupe axiale d'un dispositif d'actionnement linéaire à aimant cylindrique,

la figure 8 est une vue, dans le sens axial, partiellement en coupe, du dispositif de la figure 7, et

la figure 9 est une vue schématique, en perspective, d'un ensemble de parties aimantées rectangulaire, utilisable dans un dispositif similaire à celui de la figure 7.

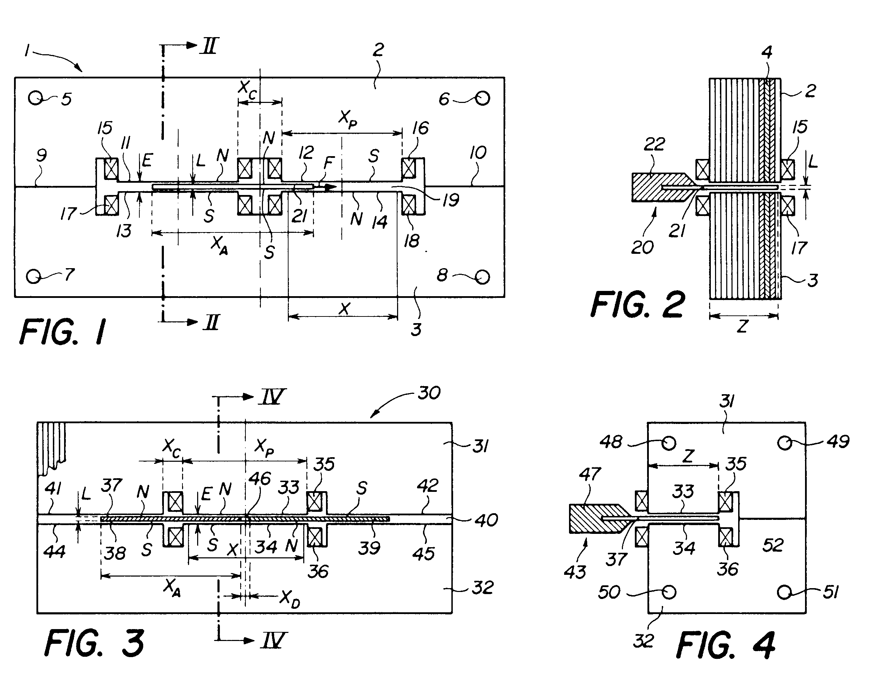

Le dispositif d'actionnement linéaire représenté aux figures 1 et 2 comporte une structure statorique 1, longitudinale, formant un entrefer 19 entre deux pièces de stator 2,3 constituées chacune par un empilement de tôles en un matériau de très haute perméabilité magnétique, par exemple en fer-nickel 50/50. Les tôles, telles que la tôle 4 référenciée dans la figure 2, s'étendent dans le sens longitudinal et sont réunies par des organes de fixation non représentés passant par exemple dans des trous d'assemblage 5,6,7,8. La forme feuilletée des pièces ainsi réalisées permet de réduire les pertes par courants de Foucault dans la structure statorique. Les extrémités des pièces de stator sont agencées pour former des joints magnétiques 9,10 assurant la fermeture des circuits magnétiques à l'extérieur de l'entrefer.

Chacune des pièces de stator 2,3 présente deux parties polaires désignées respectivement par 11,12 et 13,14, ces parties polaires étant entourées par des bobines électriques d'excitation respectives 15,16,17,18 dont les brins visibles à la figure 1 sont logés dans des encoches des pièces de stator. Les parties polaires d'une même pièce de stator avec les bobines respectives sont disposées côte à côte dans le sens longitudinal de la structure statorique et les parties polaires appartenant à des pièces de stator différentes sont disposées en regard les unes des autres à une distance constante E.

Un organe mobile 20 comporte une partie aimantée 21 mince et plate, ainsi qu'une pièce de support 22 dans laquelle la partie aimantée est encastrée comme le montre la figure 2. La pièce de support 22 est montée de façon mobile par rapport à la structure statorique par des moyens non représentés, de façon à permettre un déplacement linéaire longitudinal de la partie aimantée 21 à l'intérieur de l'entrefer 19.

La partie 21 est aimantée uniformément dans le sens de son éapisseur, c'est-à-dire perpendiculairement à ses grandes surfaces de façon à faire apparaître sur l'une de celles-ci un pôle magnétique N et sur l'autre surface, opposée, un pôle S. Le matériau formant la partie 21 est par exemple du samarium-cobalt $SmCo_5$ et présente ainsi une caractéristique de désaimantation pratiquement linéaire dans tout le domaine de travail dans lequel il est utilisé dans le présent dispositif avec par ailleurs une perméabilité réversible proche de celle de l'air. L'épaisseur L de la partie aimantée est sensiblement inférieure aux autres dimensions de celles-ci.

Les bobines 15 et 17 sont agencées pour être parcourues par des courants de telle façon qu'elles engendrent un champ magnétique dans un premier sens dans l'entrefer entre les parties polaires 11,13, celles-ci faisant par exemple apparaître à leurs surfaces respectivement des pôles magnétiques N et S. Les bobines 16,18 sont excitées quant à elles de façon à produire entre les parties polaires correspondantes 12 et 14 un champ magnétique dans le sens inverse à celui des parties 11 et 13, c'est-à-dire que la partie polaire 12 présente dans cet exemple un pôle S et la partie 14 un pôle N. Il est à noter que les différentes bobines entourent les parties polaires correspondantes à proximité de l'entrefer de manière à réduire les flux de fuite en-dehors de l'entrefer et obtenir une efficacité optimale.

Dans le présent dispositif, le chemin de déplacement de la partie aimantée dans l'entrefer 19 est limité à une longueur X, plus précisément à des longueurs de X/2 dans les deux sens à partir d'une position de symétrie. La longueur de chacune des parties polaires, mesurée également dans le sens du déplacement de la partie aimantée, est désignée par $X_P$. En règle générale X ne doit pas dépasser une longueur de $X_P - 0,5$ E. D'autre part, la longueur des parties polaires $X_P$ est choisie en tout cas plus grande que 8E et la longueur $X_A$ de la partie aimantée, mesurée dans le même sens, c'est-à-dire celui de son déplacement, est de pré-férence égale à $X_p + X_C$, $X_C$ désignant la longueur des encoches qui séparent les parties polaires dans une même pièce de stator.

Dans les conditions de dimentionnement indiquées ci-dessus, lorsque les bobines 15 à 18 sont alimentées en courant de façon que chacune d'elles présente ni/2 Ampères-tours, la partie aimantée est soumise à une force F dans le sens du déplacement qui s'exprime par la relation

$F = 2 B_r(L/E)Z.ni$, où $B_R$ représente l'induction rémanente de la partie aimantée et Z la largeur de la portion de la partie aimantée disposée dans l'entrefer, cette largeur étant mesurée perpendiculairement à la direction du déplacement (figure 2). Cette force F est indépendante de la position de la partie aimantée à l'intérieur de l'entrefer et est proportionnelle au courant d'excitation i. Il est à noter que pour la longueur préférée de la partie aimantée, c'est-à-dire $X_A = X_P + X_C$, la longueur X du chemin de déplacement sur laquelle la force F est constante pour un courant donné, atteint un maximum. Pour les longueurs $X_A$ plus petites ou plus grandes, la longueur X se trouve réduite pour devenir pratiquement nulle lorsque $X_A = X_C + 0,5$ E ou $X_A = X_C + 2 X_P - 0,5$ E. Par ailleurs, du fait que la partie aimantée se trouve placée sur l'ensemble de sa course dans un entrefer total constant, elle n'est pratiquement soumise à aucun couple résiduel en l'absence de courant d'excitation.

La disposition symétrique du dispositif selon les figures 1 et 2 par rapport au plan contenant la partie aimantée, peut être remplacée par une disposition dissymétrique dans laquelle la pièce de stator 3, par exemple, est constituée par une simple pièce de fermeture du flux sans les bobines 17 et 18.

La forme d'exécution du dispositif représenté aux figures 3 et 4 est une variante du dispositif d'actionnement linéaire des figures 1 et 2. Elle comporte une structure statorique longitudinale 30 formant un entrefer 40 dans lequel sont disposées deux portions 38,39 d'une partie aimantée plate 37 de faible épaisseur L. La partie aimantée fait partie d'un organe mobile 43 qui peut comporter, comme dans le cas de l'exemple précédent, une pièce de support 47 pour la partie aimantée, est agencée de façon à permettre un déplacement linéaire limité de la partie aimantée à l'intérieur de l'entrefer 40. Les deux portions 38 et 39 de la partie 37 sont aimantées en sens inverse, perpendiculairement à la direction de ce déplacement, de manière à faire apparaître par exemple des pôles magnétiques N et S respectivement sur les surfaces supérieures des portions 38 et 39, et des pôles S et N sur les surfaces inférieures respectives de ces portions. La longueur de chacune de ces portions aimantées, mesurée dans le sens du déplacement, est de nouveau désignée par $X_A$.

Dans le cas où la partie 37 est réalisée en une pièce de matière aimantable, les deux portions aimantées sont séparées par une zone de transition morte, désignée par 46 dans la figure 3. La dimension $X_D$ de cette zone, mesurée dans le sens du déplacement, est de préférence aussi faible que possible, par exemple de l'ordre de grandeur de l'épaisseur L de la partie aimantée. La matière de la partie aimantée présente comme dans l'exemple des figures 1 et 2 une caractéristique de désaimantation linéaire et une perméabilité réversible proche de celle de l'air.

La structure statorique 30 comporte deux pièces de stator 31,32 qui forment chacune trois parties polaires, à savoir, dans le cas de la pièce 31, une première partie polaire 33 entourée par une bobine d'excitation 35 et deux parties polaires latérales 41,42 non entourées par des bobines, disposées de part et d'autre de la première dans le sens du déplacement de la partie aimantée, avec un espacement $X_C$. Cet espacement correspond à la dimension d'encoche formant le logement de la bobine 35.

De façon similaire, la pièce de stator 32 présente une première partie polaire 34 entourée d'une bobine 36 et deux parties polaires latérales 44,45 non entourées de bobines, les parties polaires de la pièce de stator 32 étant disposées en regard des parties polaires correspondantes de la pièce de stator 31, à une distance E constante.

La longueur des différentes parties polaires, mesurée dans le sens du déplacement de la partie aimantée est désignée par $X_P$ et les bobines 35,36 sont excitées de façon à fournir des potentiels de même signe dans l'entrefer. La partie 33 correspond, par exemple, à un pôle N et la partie 34 à un pôle S.

Chacune des pièces de stator est réalisée sous forme feuilletée, mais, dans le présent exemple, la structure statorique présente une section en forme de C, comme le montre la figure 4, et les pièces de stator sont formées par conséquent par un empilement de tôles disposées perpendiculairement à la direction de déplacement de la partie aimantée. Des trous d'assemblage 48,49,50,51 sont prévus dans le sens longitudinal et un joint magnétique est réalisé par exemple à un endroit 52 située à la hauteur de l'entrefer 40. Ainsi les circuits magnétiques de la structure statorique sont fermés perpendiculairement au chemin de déplacement de la partie aimantée, autrement dit par l'arrière de cette structure, alors que selon les figures 1 et 2 la fermeture était réalisée dans des plans parallèles au chemin de déplacement. Il est à noter que chacune de ces solutions est applicable en principe dans un cas comme dans l'autre, la structure selon les figures 1 et 2 étant plus longue et la structure des figures 3 et 4 étant plus profonde.

La dispositif des figures 3 et 4 pourrait également être remplacée par une disposition dissymétrique, dans laquelle une des pièces de stator ne comporte pas de bobine et ne représente qu'une simple pièce de fermeture des circuits magnétiques.

La course de la partie aimantée 37 est limitée à une longueur totale X qui s'étend symétriquement, c'est-à-dire sur des longueurs X/2, par rapport à une position dans laquelle la zone de séparation entre les portions aimantées 38,39 se trouve au milieu entre les bords latéraux des parties polaires 33 ou 34. Comme dans l'exemple précédent, X doit être inférieur à au moins $X_P$ - 0,5 E et la longueur des parties polaires $X_P$ est de préférence toujours supérieure à au moins 8 E. Il est à noter que les parties polaires latérales 41,42,44,45 pourraient être plus longues que $X_P$. La longueur des parties aimantées $X_A$ doit toujours être sensiblement plus grande que $X_P/2$ pour que la course X puisse avoir une longueur non négligeable, longueur sur laquelle la force fournie à l'organe mobile reste constante, indépendamment de la position de cet organe. La valeur maximale de X est atteinte pour $X_A = X_P + X_C$, et la force délivrée par le dispositif est, comme précédemment, $F = 2 B_r(L/E)Z.ni$, avec les mêmes notations.

On remarque que dans le présent exemple, les Ampères-tours ni sont fournis par une seule paire de bobines 33,34, ou une seule bobine dans le cas d'une structure dissymétrique, alors que dans le cas précédent deux paires de bobines ayant chacune ni Ampères-tours étaient présentes. Il faut donc deux fois moins d'Ampère-tours pour obtenir la même force, mais une longueur totale pratiquement double de la partie aimantée.

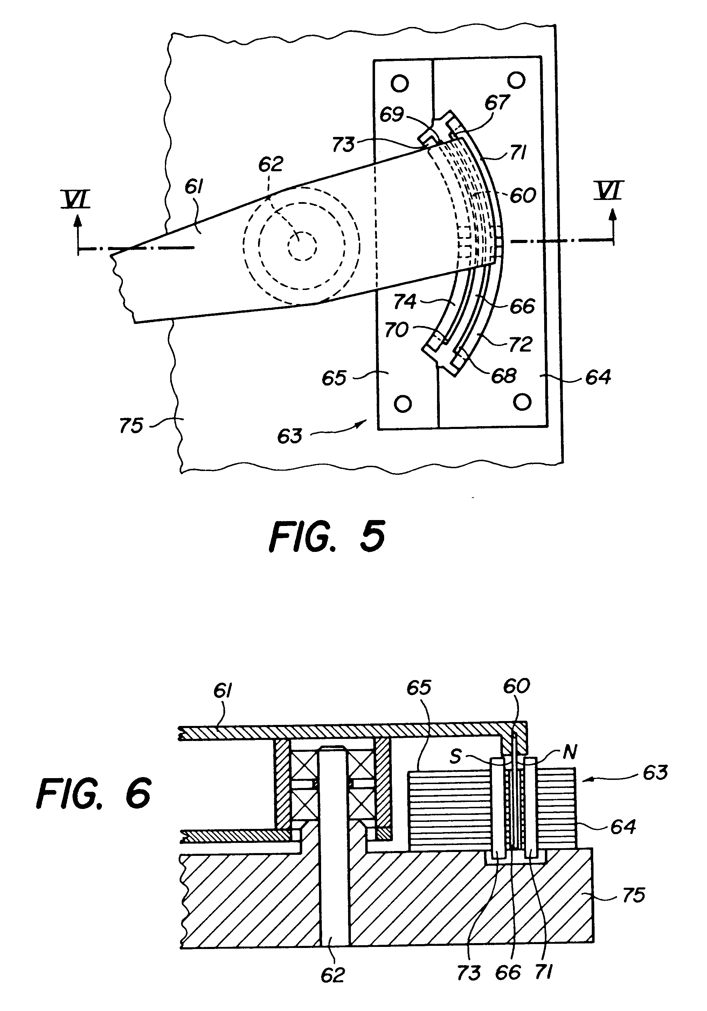

Les figures 5 et 6 représentent un dispositif d'actionnement à bras rotatif basé sur le même principe que celui des figurs 1 et 2. Une partie aimantée 60, en forme de paroi mince d'une portion d'un cylindre circulaire, est supporté par un bras 61 monté de façon rotative sur un axe 62 formant également l'axe géométrique du cylindre de la partie aimantée. La partie 60 est aimantée perpendiculairement à la direction de son déplacement, c'est-à-dire radialement, en faisant apparaître par exemple sur sa surface cylindrique extérieure un pôle magnétique N et sur surface cylindrique intérieure un pôle S.

Une structure statorique 63 supportée comme l'axe 62 par un bâti 75, comporte deux pièces de stator 64,65 formant un entrefer 66. Chaque pièce de stator présente deux parties polaires à savoir les parties 67 et 68 en ce qui concerne la pièce 64 et les parties 69,70 pour la pièce 65, les surfaces polaires de ces parties étant cylindriques et coaxiales. Les pièces de stator sont constituées par un empilement de tôles d'une façon similaire à la structure des figures 1 et 2, et les parties polaires sont entourées par des bobines électriques respectives 71,72,73,74, ces bobines étant par exemple courbées après leur bobinage et ainsi adaptées aux parties polaires.

Le dimensionnement et le fonctionnement de ce dispositif sont similaires à ceux des figures 1 et 2, la force fournie étant orientée tangentiellement par rapport au chemin de déplacement de la partie aimantée. La course maximale du bras correspondait, dans un exemple pratique, à un déplacement angulaire total de 26° et le couple par Ampère-tour était de $6,34 \cdot 10^{-4}$ Nm. Pour une puissance électrique de 10W crête, le couple total était ainsi de 0,084 Nm. Un tel dispositif à bras rotatif sert par exemple à actionner le bras d'une mémoire rotative à disque d'un type courant.

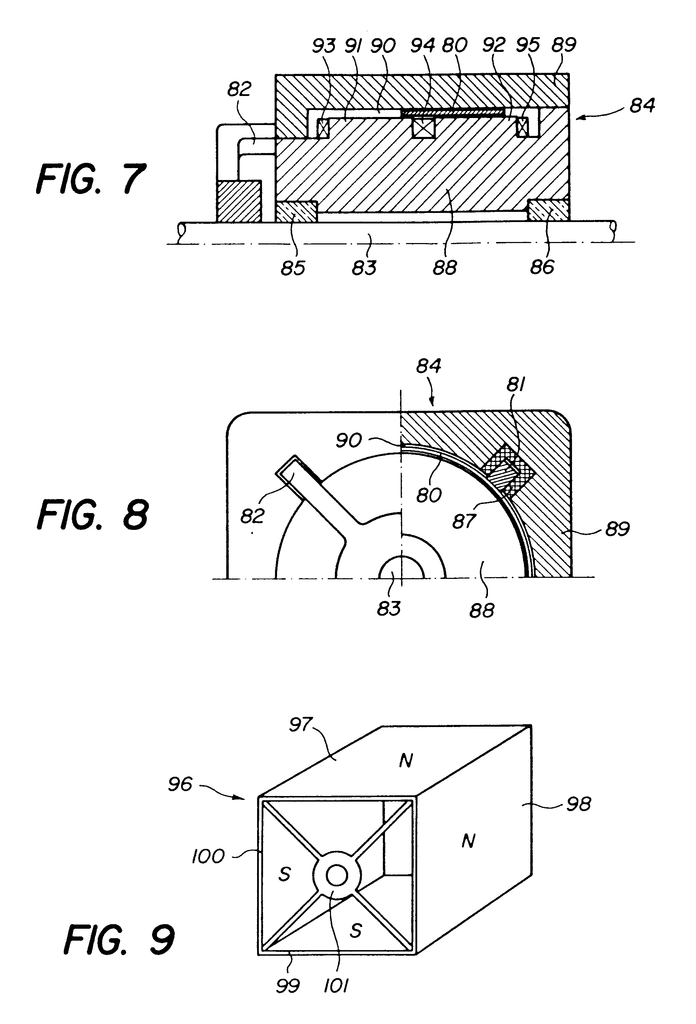

Les figures 7 et 8 représentent une autre forme d'exécution d'un dispositif d'actionnement dérivé de celui des figures 1 et 2. Il s'agit d'un actionneur linéaire à aimant cylindrique. La partie aimantée 80 a en effet la forme d'une paroi mince d'un cylindre circulaire s'étendant sur 360°, la direction de l'aimantation étant radiale. Cette partie aimantée est supportée par des bras parallèles à son axe, tels que les bras 81,82, ces bras étant solidaires d'un arbre coaxial 83.

L'arbre 83 est par exemple agencé pour pouvoir coulisser dans une structure statorique 84 par l'intermédiaire de coussinets 85,86 ou de douilles à billes par exemple. L'un des bras de support 81 peut être guidé dans la structure statorique au moyen d'une pièce de guidage 87 de manière à empêcher une rotation de l'organe mobile. Selon une forme d'exécution alternative de ce dispositif, l'arbre 83 et le dispositif de support de la partie aimantée sont filetés avec un grand pas, de manière à obliger l'arbre 83 à tourner lors du déplacement linéaire de la partie aimantée.

La structure statorique 84 comporte deux pièces de stator 88,89 formant un entrefer cylindrique 90 dans lequel est disposé la partie aimantée 80. La partie de stator intérieure 88 présente deux parties polaires cylindriques 91,92 qui sont entourées par des bobines d'excitation annulaires 93,94,95. Ces bobines peuvent par exemple être réalisées par un fil continu, les bobines 93 et 95 étant alors bobinées dans le même sens et la bobine 94 dans le sens inverse et avec un nombre de tours égal ou double de celui de chacune des bobines 93 et 95. La pièce de stator extérieure 89 ne comporte pas de bobines et constitue une simple culasse pour la fermeture des circuits magnétiques, comme dans le cas d'une variante dissymétrique de la structure des figures 1 et 2.

Dans une forme d'exécution particulièrement économique, la structure statorique est réalisée par un procédé de frittage, la partie aimantée étant par exemple en samarium-plastique moulé. La réponse dynamique d'un tel système est très amortie par les courants de Foucault engendrés par le déplacement de la partie aimantée.

La figure 9 montre un organe mobile utilisé dans une variante d'exécution du dispositif des figures 7 et 8, selon laquelle l'entrefer n'est pas cylindrique mais rectangulaire. L'organe mobile 96 comporte dans ce cas quatre parties aimantées plates 97,98,99,100, réunies pour former un parallélèpipède rectangle et supportées par des bras solidaires d'une pièce de fixation 101 sur une tige coulissante non représentée. La structure statorique peut être, dans ce cas, une simple variante de celle des figures 7 et 8, ou elle peut être réalisée sous forme d'une structure multiple composée de structures similaires à celle des figures 1 et 2.

## Revendications

1. Dispositif d'actionnement électromagnétique comportant un organe mobile et une structure statorique, l'organe mobile comprenant au moins une partie aimantée perpendiculairement à la direction de son déplacement, l'épaisseur de la partie aimantée mesurée dans le sens de son aimantation étant sensiblement constante le long du chemin de déplacement relatif d'un point fixe par rapport à un point proche situé sur la partie aimantée, et étant faible par rapport à la longueur de l'aimant mesurée le long de ce même chemin de déplacement, la partie aimantée étant réalisée en un matériau présentant, dans tout le domaine de travail, une caractéristique de desaimantation pratiquement linéaire et une perméabilité réversible proche de celle de l'air, la structure statorique comportant au moins un circuit magnétique réalisé en un matériau de très haute perméabilité magnétique et présentant un entrefer dans lequel est disposé au moins une portion de ladite partie aimantée, la structure statorique comportant en outre au moins une bobine électrique d'excitation couplée avec ledit circuit magnétique, caractérisé en ce que la partie aimantée (21) présente une seule paire de pôles magnétiques, l'aimantation étant pratiquement uniforme et s'étendant sur une longueur $X_A$ mesurée le long du chemin de déplacement d'un point de la partie aimantée situé dans l'entrefer (19), la structure statorique (1) comportant, au moins d'un côté de l'entrefer, deux parties polaires (11,12) entourées de bobines d'excitation respectives (15,16), ces parties polaires ayant chacune une longueur $X_P$ mesurée le long du même chemin de déplacement que $X_A$, et étant espacées d'une distance $X_C$ également mesurée le long dudit chemin de déplacement, $X_A$ étant sensiblement supérieur à $X_C$ et sensiblement inférieur à $X_C + 2 X_P$, en ce que l'organe mobile (20) est agencé de manière à permettre à la partie aimantée (21) d'effectuer un mouvement limité à une longueur de déplacement maximale de X/2 dans les deux sens à partir d'une position de symétrie entre lesdites parties polaires, X étant mesuré comme $X_P$ et étant égal ou inférieur à $X_P$ - 0,5 E, où $X_P$ est plus grand que 8E et E désigne la dimension de l'entrefer, constante, mesurée perpendiculairement auxdits chemins de déplacement à l'endroit d'une partie polaire, et en ce que la structure statorique est agencée de façon que les flux magnétiques engendrés par la partie aimantée dans cette stucture soient fermés dans ledit matériau à haute perméabilité magnétique en-dehors dudit entrefer.

2. Dispositif d'actionnement électromagnétique comportant un organe mobile et une structure statorique, l'organe mobile comprenant au moins une partie aimantée perpendiculairement à la direction de son déplacement, l'épaisseur de la partie aimantée mesurée dans le sens de son aimantation étant sensiblement constante le long du chemin de déplacement relatif d'un point fixe par rapport à un point proche située sur la partie aimantée, et étant faible par rapport à la longueur de l'aimant mesurée le long de ce même chemin de déplacement, la partie aimantée étant réalisée en un matériau présentant, dans tout le domaine de travail, une caractéristique de désaimantation pratiquement linéaire et une perméabilité réversible proche de celle de l'air, la structure statorique comportant au moins un circuit magnétique réalisé en un matériau de très haute perméabilité magnétique et présentant un entrefer dans lequel est disposé au moins une portion de ladite partie aimantée, la structure statorique comportant en outre au moins une bobine électrique d'excitation couplée avec ledit circuit magnétique, caractérisé en ce que la partie aimantée (37) présente deux paires de pôles magnétiques (38,39) disposées côte à côte dans la direction du déplacement, l'aimantation de chacune de ces paires étant pratiquement uniforme et de sens opposé à celle de l'autre paire et s'étendant sur une longueur $X_A$ mesurée le long du chemin de déplacement d'un point de la partie aimantée située dans l'entrefer (40), la structure statorique (31) comportant, au moins d'un côté de l'entrefer une première partie polaire (33) entourée d'une bobine électrique d'excitation (35), cette partie polaire ayant une longueur $X_P$ mesurée le long du même chemin de déplacement que $X_A$, ainsi que deux parties polaires (41,42) non entourées par des bobines, ayant des longueurs égales à $X_P$ ou plus grandes, disposées de part et d'autre de la première partie polaire avec un espacement respectif $X'_C$ également mesuré le long dudit chemin de déplacement, $X_A$ étant sensiblement plus grand que $X_P/2$, en ce que l'organe mobile (43) est agencé de manière à permettre à la partie aimantée d'effectuer un mouvement limité à une longueur de déplacement maximale de X/2 dans les deux sens à partir d'une position de symétrie par rapport à ladite première partie polaire, X étant mesuré comme $X_P$ et étant au plus égal à $X_P$ - 0,5 E, où $X_P$ est plus grand que 8E et E désigne la dimension de l'entrefer, constante, mesurée perpendiculairement audit chemin de déplacement à l'endroit d'une partie polaire, et en ce que la structure statorique est agencée de façon que les flux magnétiques engendrés par la partie aimantée dans cette structure soient fermés dans ledit matériau à haute perméabilité magnétique en-dehors dudit entrefer.

3. Dispositif selon les revendications 1 ou 2, caractérisé en ce que la longueur $X_A$ est pratiquement égale à $X_P$ + $X_C$ ou $X_P$ + $X'_C$.

4. Dispositif selon l'une des revendications précédentes, caractérisé en ce que les circuits magnétiques sont réalisés sous forme feuilletée.

5. Dispositif selon l'une des revendications précédentes, caractérisé en ce que les bobines sont disposées au voisinage immédiat de l'entrefer.

6. Dispositif selon l'une des revendications précédentes, caractérisé en ce que la partie aimantée se présente sous forme d'une portion de paroi, de faible épaisseur, d'un cylindre circulaire, le déplacement de l'organe mobile étant un déplacement angulaire autour de l'axe dudit cylindre.

7. Dispositif selon l'une des revendications précédentes, caractérisé en ce que la partie aimantée se présente sous forme d'une paroi, de faible épaisseur, d'un cylindre circulaire ou des parois d'un parallélépipède rectangle, le déplacement de l'organe mobile s'effectuant dans la direction des génératrices de ces parois.

8. Dispositif selon l'une des revendications précédentes, caractérisé en ce que l'organe mobile comporte plusieurs parties aimantées coopérant chacune avec une structure statorique respective.

## Claims

1. Electromagnetic actuating device comprising a movable member and a stator structure, the movable member comprising at least one part magnetized perpendicularly to the direction of its movement, the thickness of the magnetized part measured in the direction of the magnetization being substantially constant over the length of the path of relative movement of a stationary point with respect to a point located closely on the magnetized part, and being small with respect to the length of the magnet measured along this same path of movement, the magnetized part being made of a material having in the whole working range a substantially linear demagnetization characteristic and a reversible permeability close to that of air, the stator structure comprising at least one magnetic circuit made of a material of a very high magnetic permeability, and having an air-gap in which at least one portion of said magnetized part is arranged, the stator structure further comprising at least one electric energizing coil coupled with said magnetic circuit, characterized in that the magnetized part (21) has a single pair of magnetic poles, the magnetization being practically uniform and extending over a length $X_A$ measured along the path of movement of a point of the magnetized part located in the air-gap (19), the stator structure (1) comprising on at least one side of the air-gap, two polar parts (11,12) surrounded by respective energizing coils (15,16), these polar parts having each a length $X_P$ measured along the same path of movement as $X_A$, and being spaced by a distance $X_C$ also measured along said path of movement, $X_A$ being substantially greater than $X_C$ and notably smaller than $X_C + 2 X_P$, in that the movable member (20) is arranged to allow the magnetized part (21) to effect a movement limited to a maximum length of movement of $X/2$ in both directions from a position of symmetry between said polar parts, $X$ being measured as $X_P$ and being equal to, or smaller than $X_P - 0,5 E$, wherein $X_P$ is greater than $8 E$ and $E$ designates the constant dimension of the air-gap measured perpendicularly to said paths of movement at the place of a polar part, and in that the stator structure is arranged so that the magnetic fluxes generated by the magnetized part in said structure are closed in said material of high magnetic permeability outside of said air-gap.

2. Electromagnetic actuating device comprising a movable member and a stator structure, the movable member comprising at least one part magentized perpendicularly to the direction of its movement, the thickness of the magnetized part measured in the direction of the magnetization being substantially constant over the length of the path of relative movement of a stationary point with respect to a point located closely on the magnetized part, and being small with respect to the length of the magnet measured along this same path of movement, the magnetized part being made of a material having in the whole working range a substantially linear demagnetization characteristic and a reversible permeability close to that of air, the stator structure comprising at least one magnetic circuit made of a material of high magnetic permeability and having an air-gap in which at least a portion of said magnetized part is arranged, the stator structure further comprising at least one electric energizing coil coupled with said magnetic circuit, characterized in that the magnetized part (37) has two pairs of magnetic poles (38,39) arranged side by side in the direction of movement, the magnetization of each of these pairs being practically uniform and of a direction opposite to that of the other pair and extending over a length $X_A$ measured along the path of movement of a point of the magnetized part located in the air-gap (40), the stator structure (31) comprising, on at least one side of the air-gap, a first polar part (33) surrounded by an electric energizing coil (35), this polar part having a length $X_P$ measured the same path of movement as $X_A$, as well as two polar parts (41,42) not surrounded by coils, having a length equal to $X_P$ or greater, arranged on either side of the first polar part with a respective spacing of $X'_C$ measured also along said path of movement, $X_A$ being substantially greater than $X_P/2$, and in that the movable member (43) is arranged for allowing the magnetized part to effect a movement limited to a maximum length of movement of $X/2$ in both directions from a position of symmetry with respect to said first polar part, $X$ being measured as $X_P$ and being at most equal to $X_P - 0,5 E$, wherein $X_P$ is greater than $8 E$ and $E$ designates a constant dimension of the air-gap measured perpendicularly to said path of movement at the place of a polar part, and in that the stator structure is arranged so that the magnetic fluxes generated by the magnetized part in said structure are closed in said material of high magnetic permeability outside of said air-gap.

3. Device according to claims 1 or 2, characterized in that the length $X_A$ is practically equal to

$X_P + X_C$ or $X_P + X'_C$.

4. Device according to one of the preceding claims, characterized in that the magnetic circuits are realized in lamellar form.

5. Device according to one of the preceding claims, characterized in that the coils are placed in the immediate vicinity of the air-gap.

6. Device according to one of the preceding claims, characterized in that the magnetized part has the form of a wall portion of small thickness of a circular cylinder, the movement of the movable member being an angular movement arround the axis of said cylinder.

7. Device according to one of the preceding claims, characterized in that the magnetized part has the form of a wall of small thickness of a circular cylinder or of the walls of a rectangular parallelepiped, the movement of the movable member taking place in the direction of the generating lines of these walls.

8. Device according to one of the preceding claims, characterized in that the movable member comprises a plurality of magnetized parts cooperating with a respective stator structure.

**Patentansprüche**

1. Elektromagnetische Antriebsvorrichtung, die einen beweglichen Teil und eine Statoranordnung aufweist, wobei der bewegliche Teil mindestens ein senkrecht zu seiner Bewegungsrichtung magnetisiertes Teil aufweist, die Dicke des magnetisierten Teils, in der Magnetisierungsrichtung gemessen, entlang dem Weg der Relativbewegung eines festen Punktes gegenüber einem nahe liegenden Punkt auf dem magnetisierten Teil praktisch konstant ist und klein ist gegenüber der Länge des Magneten gemessen entlang diesem selben Bewegungsweg, wobei das magnetisierte Teil aus einem Material hergestellt ist, das im gesamten Arbeitsbereich eine praktisch lineare Entmagnetisierungskennlinie aufweist und eine reversible Permeabilität nahe derjenigen von Luft, wobei die Statoranordnung mindestens einen magnetischen Kreis aus einem Material mit sehr hoher magnetischer Permeabilität aufweist, der einen Luftspalt besitzt, in dem mindestens ein Stück des genannten magnetisierten Teils angeordnet ist, die Statoranordnung ferner mindestens eine elektrische Erregerspule aufweist, die mit dem genannten magnetischen Kreis gekoppelt ist, dadurch gekennzeichnet, dass das magnetisierte Teil (21) ein einziges magnetisches Polpaar aufweist, wobei die Magnetisierung praktisch gleichförmig ist und sich über eine Länge $X_A$, gemessen entlang dem Bewegungsweg eines im Luftspalt (19) gelegenen Punktes des magnetisierten Teils erstreckt, wobei die Statoranordnung (1) zumindest auf einer Seite des Luftspalts zwei Polteile (11,12) aufweist, die von entsprechenden Erregerspulen (15,16) umgeben sind, wobei diese Polteile jeweils eine Länge $X_P$ gemessen entlang demselben Bewegungsweg wie $X_A$ haben und in einem Abstand $X_C$ voneinander liegen, der ebenfalls entlang des genannten Bewegungswegs gemessen ist, wobei $X_A$ wesentlich grösser als $X_C$ ist und wesentlich kleiner als $X_C + 2 X_P$, dass der bewegliche Teil (20) so ausgebildet ist, dass das magnetisierte Teil (21) eine auf eine maximale Bewegungslänge von $X/2$ in beiden Richtungen, ausgehend von einer Symmetriestellung zwischen den genannten Polteilen, begrenzte Bewegung ausführen kann, wobei $X$ wie $X_P$ gemessen wird und gleich oder kleiner als $X_P - 0,5 E$ ist, wobei $X_P$ grösser ist als $8 E$ und $E$ die konstante Abmessung des Luftspalts, gemessen senkrecht zu den genannten Bewegungswegen an der Stelle eines Polteils, bezeichnet, und dass die Statoranordnung so ausgebildet ist, dass die magnetischen Flüsse, welche in dieser Anordnung durch das magnetisierte Teil erzeugt werden, sich in dem genannten Material von hoher magnetischer Permeabilität ausserhalb des genannten Luftspalts schliessen.

2. Elektromagnetische Antriebsvorrichtung, die einen beweglichen Teil und eine Statoranordnung aufweist, wobei der bewegliche Teil mindestens ein senkrecht zu seiner Bewegungsrichtung magnetisiertes Teil aufweist, die Dicke des magnetisierten Teils in der Magnetisierungsrichtung gemessen entlang dem Weg der Relativbewegung eines festen Punktes gegenüber einem nahe liegenden Punkt auf dem magnetisierten Teil praktisch konstant ist und klein ist gegenüber der Länge des Magneten gemessen entlang diesem selben Bewegungsweg, wobei das magnetisierte Teil aus einem Material hergestellt ist, das im gesamten Arbeitsbereich eine praktisch lineare Entmagnetisierungskennlinie aufweist und eine reversible Permeabilität nahe derjenigen von Luft, wobei die Statoranordnung mindestens einen magnetischen Kreis aus einem Material mit sehr hoher magnetischer Permeabilität aufweist, der einen Luftspalt besitzt, in dem mindestens ein Stück des genannten magnetisierten Teils angeordnet ist, die Statoranordnung ferner mindestens eine elektrische Erregerspule aufweist, die mit dem genannten magnetischen Kreis gekoppelt ist, dadurch gekennzeichnet, dass das magnetisierte Teil (37) zwei magnetische Polpaare aufweist (38,39), die nebeneinander in der Bewegungsrichtung angeordnet sind, wobei die Magnetisierung jedes dieser Paare praktisch gleichförmig und gegenüber derjenigen des anderen Paares entgegengesetzt gerichtet ist und sich über eine Länge $X_A$ gemessen entlang dem Bewegungsweg eines im Luftspalt (40) gelegenen Punktes des magnetisierten Teils erstreckt, wobei die Statoranordnung zumindest auf einer Seite des Luftspalts ein erstes Polteil (33) aufweist, das von einer elektrischen Erregerspule (35) umgeben ist, wobei dieses Polteil eine Länge $X_P$, gemessen entlang demselben Bewegungsweg wie $X_A$, besitzt, sowie zwei Polteile (41,42), die nicht von Spulen umgeben sind, gleiche oder grössere Längen als $X_P$ aufweisen und zu beiden Seiten des ersten Polteils jeweils mit einem Abstand $X'_C$, ebenfalls entlang dem genannten Bewegungsweg gemessen, angeordnet sind, wobei $X_A$ wesentlich grösser als $X_P/2$ ist, dass der bewegliche Teil (43) so ausgebildet ist, dass das magnetisierte Teil eine auf eine maximale Bewegungslänge von $X/2$ in beiden Richtungen, ausgehend von einer Symmetriestellung in Bezug auf das genannte erste Polteil begrenzte Bewegung ausführen kann, wobei $X$ wie $X_P$ gemessen wird und höchstens gleich $X_P - 0,5\,E$ ist, wobei $X_P$ grösser ist als $8\,E$ und $E$ die konstante Abmessung des Luftspalts gemessen senkrecht zu dem genannten Bewegungsweg an der Stelle eines Polteils bezeichnet, und dass die Statoranordnung so ausgebildet ist, dass die magnetischen Flüsse, welche in dieser Anordnung durch das magnetisierte Teil erzeugt werden, sich in dem genannten Material von hoher magnetischer Permeabilität ausserhalb des genannten Luftspalts schliessen.

3. Antriebsvorrichtung gemässs Patentanspruch 1 oder 2, dadurch gekennzeichnet dass die Länge $X_A$ praktisch gleich $X_P + X_C$ oder $X_P + X'_C$ ist.

4. Antriebsvorrichtung gemäss einem der vorhergehenden Patentansprüche, dadurch gekennzeichnet, dass die magnetischen Kreise in lamellierter Form ausgeführt sind.

5. Antriebsvorrichtung gemäss einem der vorhergehenden Patentansprüche, dadurch gekennzeichnet, dass die Spulen in der unmittelbaren Umgebung des Luftspalts angeordnet sind.

6. Antriebsvorrichtung gemäss einem der vorhergehenden Patentansprüche, dadurch gekennzeichnet, dass das magnetisierte Teil in Form eines Wandstücks von geringer Dicke eines Kreiszylinders vorliegt, wobei die Bewegung des beweglichen Teils eine Winkelbewegung um die Achse des genannten Zylinders ist.

7. Antriebsvorrichtung gemäss einem der vorhergehenden Patentansprüche, dadurch gekennzeichnet, dass das magnetisierte Teil in Form einer Wand von geringer Dicke eines Kreiszylinders oder in Form von Wänden eines rechtwinkeligen Parallelepipeds vorliegt, wobei die Bewegung des beweglichen Teils in der Richtung der Erzeugenden dieser Wände erfolgt.

8. Antriebsvorrichtung gemäss einem der vorhergehenden Patentansprüche, dadurch gekennzeichnet, dass das bewegliche Teil mehrere magnetisierte Teile aufweist, welche jeweils mit einer entsprechenden Statoranordnung zusammenwirken.

FIG. 2

FIG. 4

FIG. 1

FIG. 3

FIG. 5

FIG. 6

**FIG. 7**

**FIG. 8**

**FIG. 9**